# EUROPEAN PATENT APPLICATION

(11) **EP 1 120 332 A2**
(43) Date of publication of application: **01.08.2001**
(21) Application number: 01300559.0
(22) Date of filing: 22.01.2001
(51) Int. Cl.: B62D 43/04, E05C 19/10, E05B 65/12, E05B 17/20

(54) **Security device**

(30) Priority: 29.01.2000 GB 0002021
(71) Applicant: Secured by Design Ltd., Milton Keynes, Buckinghamshire MK5 6LB (GB)
(72) Inventor: Jones, Gareth Bryn, Milton Keynes, Buckinghamshire MK5 6LB (GB)

(57) **Abstract**

A security device in the form of hook and bar hook and bar closure mechanism for retaining doors or gates 1 which are secured in the closed position by a hook 5 engaging a bar 4 on the door or gate, a shroud member 11 to prevent access to the nip 9 between the hook 5 and the bar 4 such shroud member 11 being securable in a protective position relative to said nip 9 by operation of an actuator 6 in the closing direction and to permit access to said nip 9 by operation of the actuator 6 in the opening direction. In the case where this mechanism is to be applied is the spare wheel carrier 1 of a lockable motor vehicle the actuator 6 is constituted by a scewed member 6,6a operable on rotation to raise the bar 4 into recesses 12 in the shroud 11 and press the latter into firm abutment with the vehicle body.

## Description

In the motor vehicle industry for example cages or containers often have doors or retaining gates which are secured in the closed position by a hook engaging a bar on the door or gate, the hook, or an extension of it being pulled to a "shut" position by a closure actuator such as a screw, spring, hydraulic, overcentre or other mechanism. In order to render the arrangement secure from theft the actuator, referred to, is often positioned in an inaccessible place such as within the body of the vehicle which is then locked when unattended. The arrangement has been found wanting in that a wedge may be inserted into the nip between the hook and the bar and leverage applied so that the bar is caused to bend and the jaw of the hook to spread sufficient to disengage the two.

The present invention seeks to prevent separation of the hook and the bar in this manner.

According to the present invention in a hook and bar closing mechanism referred to above a shroud member is provided to prevent access to the nip between the hook and the bar such shroud member being secured in position relative to said nip by operation of an actuator in the closing direction and to permit access to said nip by operation of the actuator in the opening direction.

Preferably the shroud member is carried loosely by said hook during operation of the actuator in the opening direction.

Alternatively the shroud member is fixed relative to the actuator.

Preferably also the shroud member is constituted by a tube.

The preferred application to which this mechanism is to be applied is the spare wheel carrier of a motor vehicle. The invention is illustrated with reference to the accompanying drawings of which:
Figure 1 represents a cage for a spare wheel of a motor vehicle having a present day securing arrangement;
Figure 2 is an enlarged view of the side of the securing arrangement of Figure 1;
Figure 3 is a cross sectioned cutaway view of the invention in which a shroud member is in position to expose access to allow release of the hook from the bar;
Figure 4 is similar to Figure 3 in which the shroud member is in position to prevent access to the hook and bar but is not secure in that position;
Figure 5 is similar to figure 3 and shows the shroud member in position to prevent access to the hook and bar and is secure in that position.

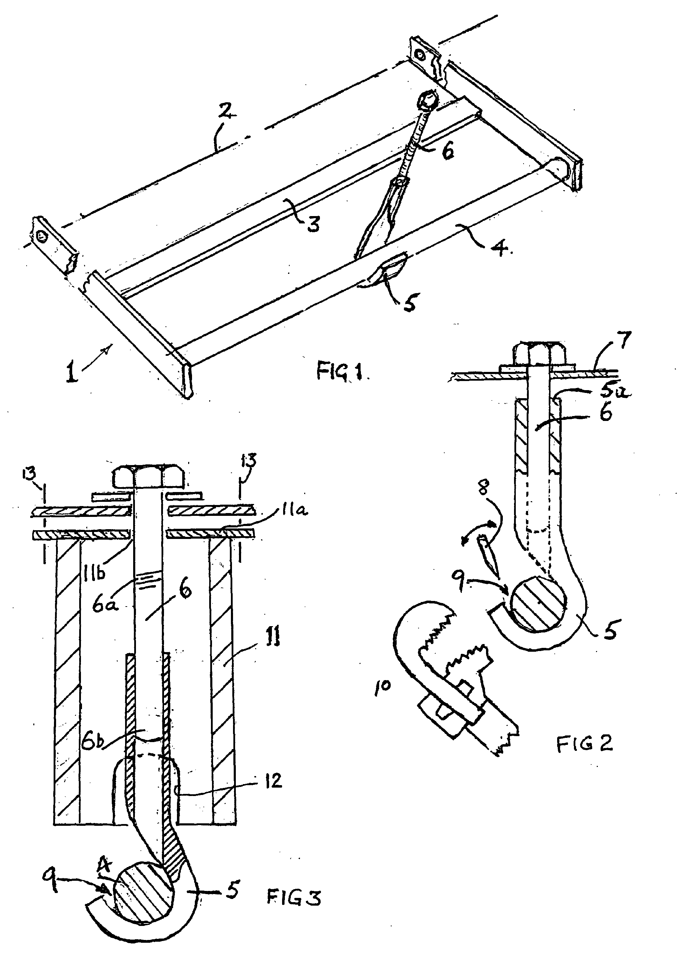

Figure 1 shows an underslung cage for a spare wheel (not shown)of a motor vehicle (not shown) adapted to pivot on an axis 2 on the underside of the vehicle to allow mounting and dismounting of the wheel. Braces 3, one of which is shown, form the base of the cage and a bar 4 forms the end. A hook 5 is placed around the bar when the latter is lifted sufficiently by hand and thereafter a bolt 6 Fig 2, passing through a hole in the vehicle floor 7 and in threaded engagement with the shank 5a of the hook 5, is rotated to lift the hook 5, bar 4, cage 1 and contents to a transport position. In this position the upper end of shank 5a of the hook 5 abuts the floor 7 (Fig 2)and is tightened firmly to retain the cage.

As can be seen in Fig 2 a wedge 8 such as a strong screwdriver blade or "jemmy" can be inserted into the nip 9 to part the hook 5 from the bar 4. Alternatively a clamping wrench 10 may be used for this purpose. Clearly this problem can be solved by making both bar and hook stronger but this would be at the expense of direct cost and a consequential cost of altering the structure of the vehicle.

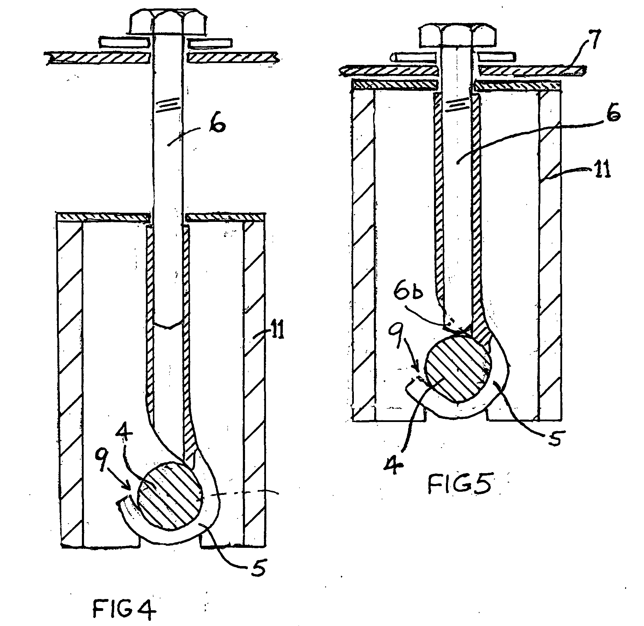

Figure 3 shows a bolt 6,threaded along its length (identified by notional threads 6a), floor 7, hook 5 and bar 4 as before with the addition of a cylindrical tube 11. The latter is shown in cross section and encircles the hook 5 and the bolt 6. A plate 11a which is fastened to the tube has a central hole llb, which permits the bolt 6 to pass through it. It covers the top of the tube 11. At the bottom of the tube 11 are two arch shaped recesses 12 placed diametrically opposite each other and shaped to accommodate and rest on the bar 4 on both sides of the hook 5 when the tube 10 is lowered from the position shown in figure 3.

In the position shown in Figure 4, the nip 9 is shrouded and the hook is at the bottom of its travel. The tube can be lifted by hand and the hook 5 detached from the bar 4 to drop the cage 1 for removal of the spare wheel. On rotating the screw 6 from the position shown in Figure 4 the hook 5 and consequently the cage 1 is lifted until the top of the tube 6 abuts the floor 7 and the access to the nip 9 is prevented. This is shown in Figure 5.

The embodiment above relies on the tube being loose and capable of being lifted off the top of the shank 5a of the hook 5.

A second embodiment is now to be described with reference to Fig 3 by assuming that the tube 11 is fixed to the floor 7 by conventional fastenings along centre lines 13 or otherwise. On unwinding the bolt 6 the hook drops below the bottom of the tube 11 to a level where it can conveniently be detached from the bar. In this case there is no need to touch the tube 11.

The lengths of the bolt 6, hook 5, shank 5a, and tube 11 may be adjusted mutually to achieve the object of shrouding the nip 9 when the bolt is fully tightened. Spacers of various sizes may be chosen to enable one design of hook and tube to serve more than one design of vehicle, or in the event that the floor 7 is made up of a double walled structure. It is also desirable that when fully tightened the nose 6b of the bolt 6 should be in position to prevent separation of the bar 4 from the hook 5, as best seen in Fig 5.

In the foregoing the term 'tube' has been used for convenience. This term should be understood to mean not only a tube of circular cross section but one of any closed geometrical form, however constructed.

## Claims

1. A security device in the form of hook and bar closure mechanism for retaining doors or gates (1) which are secured in the closed position by a hook (5) engaging a bar (4) on the door or gate, a shroud member (11) to prevent access to the nip (9) between the hook (5) and the bar (4) such shroud member (11) being securable in a protective position relative to said nip (9) by operation of an actuator (6) in the closing direction and to permit access to said nip (9) by operation of the actuator (6) in the opening direction.

2. A security device in the form of hook and bar closure mechanism as claimed in claim 1 wherein the shroud member (11) is carried loosely by said hook (5) during operation of the actuator (6) in the opening direction.

3. A security device in the form of hook and bar closure mechanism as claimed in claim 1 wherein the shroud member (11) is fixed relative to the actuator (6).

4. A security device in the form of hook and bar closure mechanism as claimed in claim 2 or claim 3 wherein the shroud member is provided with recesses (12) to receive the bar (4) and shroud the nip (9).

5. A security device in the form of hook and bar closure mechanism as claimed in any preceding claim wherein the shroud member (11) is constituted by a tube.

6. A security device in the form of hook and bar closure mechanism as claimed in claim 5 wherein said tube (11) is of circular cross section.

7. A security device in the form of hook and bar closure mechanism as claimed in claim 4, and in the case where this mechanism is to be applied is the spare wheel carrier (1) of a lockable motor vehicle the actuator (6) is constituted by a scewed member (6,6a) operable on rotation to raise the nip (9) between the hook (5) and the bar (4) into the tube (11).

8. A security device in the form of hook and bar closure mechanism as claimed in claim 7 wherein, on raising the hook (5) lifts the bar (4) and the shroud (11) into firm abutment with the vehicle.

9. A security device in the form of hook and bar closure mechanism as claimed in claim 7, and in the case where the shroud is fastened to the vehicle, wherein, on raising the hook (5) lifts the bar (4) into firm abutment with the shroud (11).

10. A security device in the form of hook and bar closure mechanism as claimed in claim 8 or claim 9 wherein, on raising the hook (5) to the fullest extent permitted by the shroud (110) the nose (6b) of the screwed Omember (6,6a) is also in position to prevent separation of the hook (5) and the bar (4).
